# EUROPEAN PATENT SPECIFICATION

(11) **EP 0 825 895 B1**
(45) Date of publication and mention of the grant of the patent: **16.12.1998**
(21) Application number: 95931307.3
(22) Date of filing: 12.09.1995
(51) Int. Cl.: B01D 33/03

(54) **IMPROVEMENTS IN AND RELATING TO VIBRATORY SCREENING APPARATUS**
VERBESSERUNGEN IN UND BEZÜGLICH ZU VIBRATIONSSIEBMASCHINEN
PERFECTIONNEMENTS SE RAPPORTANT A UN DISPOSITIF DE CRIBLAGE VIBRANT

(30) Priority: 13.09.1994 GB 9418398; 12.12.1994 GB 9424986
(43) Date of publication of application: 04.03.1998
(73) Proprietor: RIG TECHNOLOGY LIMITED, Aberdeen AB1 2LP (GB)
(72) Inventor: BAILEY, Marshall, Graham, Banchory Kincardineshire AB31 3PY (GB)
(74) Representative: Nash, Keith Wilfrid
(86) International application number: GB9502156
(87) International publication number: WO9608301

(56) References cited:
- GB-A- 832 041
- GB-A- 2 141 673

## Description

### Field of the invention

This invention relates to vibratory screening apparatus and to a method of removing drilling debris from a mixture of drilling mud and debris.

### Background to the invention

Vibratory screening apparatus is commonly used on off-shore oil rigs or platforms to remove drilling cuttings from the drilling mud which is used in the drilling process as a lubricant, a sealant to maintain drill hole pressure, a coolant for the drill and as a hydraulic carrier for the cuttings produced by the drilling process.

Such apparatus includes a filter screen of a woven wire mesh supported in a basket which is vibrated as a mixture of mud and cuttings is deposited on the screen. The mud can travel through the mesh, whereas cuttings which are too large to pass through the mesh remain on the screen. Those cuttings are conveyed by the vibrations to the edge of the screen from which they drop into a cuttings discharge.

If the mixture is fed to the apparatus at a rate greater than the rate at which the apparatus is able to process the mixture the apparatus is overloaded, leading to the loss of mud (which is an expensive product) through spillage. This problem could be ameliorated by providing larger apparatus. However, such apparatus would be inefficient if required to process mixture at low rates, in view of the power needed to vibrate the relatively large screen of the apparatus.

In addition, the performance of the apparatus can be adversely affected by agglomerations of cuttings (know as "pats") which stick to the mesh of the screen. Those agglomerations not only reduce the area of screen through which mud can pass but also impede the progress of other cuttings across the screen and encourage further agglomerations to be formed.

Published UK Patent Specification No. GB-A-2084 257 shows various types of apparatus for dewatering coal slurry and separating fine and coarse particles in the slurry, including apparatus having a succession of classifying basins through which the slurry is passed. However, none of the apparatuses shown in that publication is adapted to cope with fluctuations in the required rate of processing of slurry, nor the possible problems caused by agglomerations.

UK Patent No. GB 832041 shows dewatering apparatus which employs a vibratory screen, but does not address either of the problems discussed above.

### Summary of the invention

According to a first aspect of the invention, there is provided vibratory screen filter apparatus for removing solids from a mixture of liquid and solids, the apparatus comprising a plurality of vibratory screening units each having a filter screen and vibrating means for vibrating said screen; common inlet means adjustable to vary the relative rates of supply of mixture to the screens; sensor means for use in monitoring the amount of mixture on each screen; and control means operable, in response to signals from said sensor means and data on the required rate of processing of the mixture to control the relative amounts of mixture supplied to the screening units and to control the operation of said units to enable said required rate of processing to be achieved.

Thus, if mixture is to be processed at a low rate, the control means can activate just one of the vibratory screening units, and the inlet means can be adjusted so that all of said mixture flows on to the one operating unit. If the required rate of processing of the mixture is greater than the maximum rate at which a single unit can process the mixture, one or more further units can be activated and the mixture distributed to all the active units which operate in parallel. Thus, the apparatus can process mixture at a relatively large rate and can also process mixture at a small rate relatively efficiently since only one screen has to be vibrated in the latter case.

Preferably, therefore, if some but not all of the screening units are operating and the sensor means indicates that the amount of mixture on the each of the screen of the operating units corresponds to a predetermined maximum, the control unit is operable to activate further units in response to an increase in the rate of supply of mixture to the apparatus.

In addition, the control means is preferably operable, in response to the detection of an increase in the amount of mixture at the inlet means, to increase the rate of supply of mixture to any operating unit, the detected amount of mixture on the screen of which is less than said maximum.

Preferably, the inlet means comprises a reservoir for the mixture and gate means for controlling the rate at which the mixture is transferred from the reservoir to the screens of the screening units. In this case, the apparatus preferably includes further sensor means operable to monitor the depth of mixture in the reservoir, wherein the further sensor means enables the rate at which the mixture is being deposited on the screen to be determined.

Preferably the further sensor means is operable to detect the respective depth of the reservoir at each of at least two spaced apart regions.

This enables variations in the depths of mixture at said regions which are caused by, for example, pitching or rolling of a platform on which the apparatus is installed to be identified and taken into account.

To that end the further sensor means preferably comprises two depth sensors, each mounted above a respective region of the reservoir.

Where the inlet means is so shaped that the reservoir is elongate, the depth sensors are preferably each positioned above a respective end region of the reservoir.

Preferably, the sensor means comprises a plurality of level sensors, each associated with a respective unit, and each arranged to detect the level of mixture on the screen of its unit. In this case, the control means is preferably operable to compare the outputs from level sensors of the sensor means, to compensate for changes in the outputs of those sensors caused by, for example, pitch and roll of a platform on which the apparatus is installed.

According to a second aspect of the invention, there is provided a method of removing solids from a mixture of solids and liquids at a required rate which can vary, the method comprising the steps of depositing the mixture on one or more of a plurality of vibratory screening units, each having a respective filter screen and means for vibrating said screen, monitoring the amount of mixture on the screen of each operating filter unit; controlling the operation of the units and adjusting the rate of supply of mixture to at least one of said operating units so as to accommodate changes in the required rate of processing of the mixture.

Preferably, the control means is operable to activate and deactivate selected screening units and to vary the frequency of operation of at least one of said units by increasing or decreasing the latter by one or more small frequency steps.

It has been found that a frequency decreasing step can be just as effective as a frequency increasing step.

Preferably the control means so controls the frequency of vibration that each frequency step is of at least 5 Hz.

Preferably the control means, in use, changes the frequency of vibration by alternating "frequency-increasing" and "frequency- decreasing" steps.

Conveniently, the frequencies of vibration lie within the range 24-33 Hz.

Preferably the control means also so controls the frequency of vibration of the screen that the intervals between successive steps are varied.

For example a screening unit may initially be operating at an upper frequency, which is then reduced, by a frequency decreasing step of 5 Hz, to a lower frequency at which the screen vibrates for any time between 1 second and 3 minutes before a frequency increasing step occurs.

The control means may be operable to cause the frequency steps to occur at random intervals, or at intervals determined by an algorithm.

Alternatively or in addition, the control means may be operable to cause said frequency changing steps to occur in response to signals from said sensor means.

For example, an increase in the level of mixture on the screen of a given unit, which is not accompanied by an increase in said rate at which the mixture is deposited onto that screen, is indicative of a reduction in the rate at which that unit can process the mixture, and triggers at least one frequency changing step.

The sensor means may to advantage include a vibration sensor for monitoring the frequency of vibration of the screen.

Preferably each screening unit includes a secondary vibratory screen positioned beneath the other vibratory screen, and held in position by pneumatic clamps, and the apparatus includes sensors for detecting the pressure of the air supplied to the clamps, the apparatus having an interlock facility for preventing operation of the apparatus when the air pressure is not sufficient to enable the secondary screen to be clamped in position.

According to a third aspect of the invention, there is provided a vibratory screening apparatus for removing solids from a mixture of a liquid and solids, the apparatus comprising a vibratory filter screen, vibration means for vibrating the screen, and control means connected to the vibration means and operable to control the frequency of vibration of the screen, wherein the control means, in use, varies the frequency of vibration of the screen so as to facilitate the transportation of solids across the screen and to break up agglomerations of said solids on the screen.

According to a fourth aspect of the invention there is provided a method of removing solids from a liquid/solids mixture, particularly drilling cuttings from a mixture of drilling mud and cuttings, prior to the re-use of the mud, the method comprising the steps of placing the mixture on a filter screen through which the mud passes to a discharge therefor, whilst cuttings remain on the screen and vibrating the screen so that said cuttings travel along the screen to a discharge for said cuttings, wherein the frequency of vibration of the screen is varied so as to break up any agglomerations of cuttings stuck thereto.

Although described in relation to drilling cuttings and mud, the method is of general application.

Preferably the frequency of vibration is varied by one or more frequency increasing or frequency decreasing steps.

Preferably the frequency is varied by alternating "frequency- increasing" and "frequency-decreasing" steps.

The frequency of vibration may to advantage lie in the range 24-33 Hz, and each frequency increasing or decreasing step is preferably of at least 5 Hz. Preferably the time intervals between successive steps vary in a random fashion.

Alternatively or in addition, the frequency changing steps may occur in response to signals from sensor means as hereinabove described for monitoring the performance of the apparatus.

According to a fifth aspect of the invention, there is provided vibratory screening apparatus for removing solids from a mixture of solids and liquid, the apparatus comprising a filter screen, vibrating means for vibrating the screen, inlet means from which, in use the mixture is supplied to the screen, sensor means for monitoring one or more features associated with the operation of the apparatus and control means operable to control one or more operating parameters of the apparatus in response to signals from said sensor means.

According to a sixth aspect of the invention, there is provided a plurality of vibratory screening units, each comprising apparatus in accordance with the fifth aspect of the invention, wherein said units share a common inlet means adjustable to vary the relative amounts of mixture supplied to the screens and the control means controls the relative amounts of the mixture supplied to the screens in response to data regarding the required rate of processing of the mixture and information derived from said sensor means on the amount of mixture being processed by each unit so as to enable a required total rate of processing the mixture to be achieved.

### Brief description of the drawings

An example of apparatus in accordance with the invention will now be described by way of example, with reference to the accompanying drawings in which:
Figure 1 is an exploded perspective view of the apparatus, which includes three vibratory screening units;
Figure 2 is a side view of one of said units;
Figure 3 is a partially cut-away side view of the unit;
Figure 4 is a plan view of the unit, in which, for the sake of clarity, the filter screen of the unit is omitted; and
Figure 5 is an end view of the unit as viewed in the direction indicated by arrow A of Figure 2.

### Detailed description

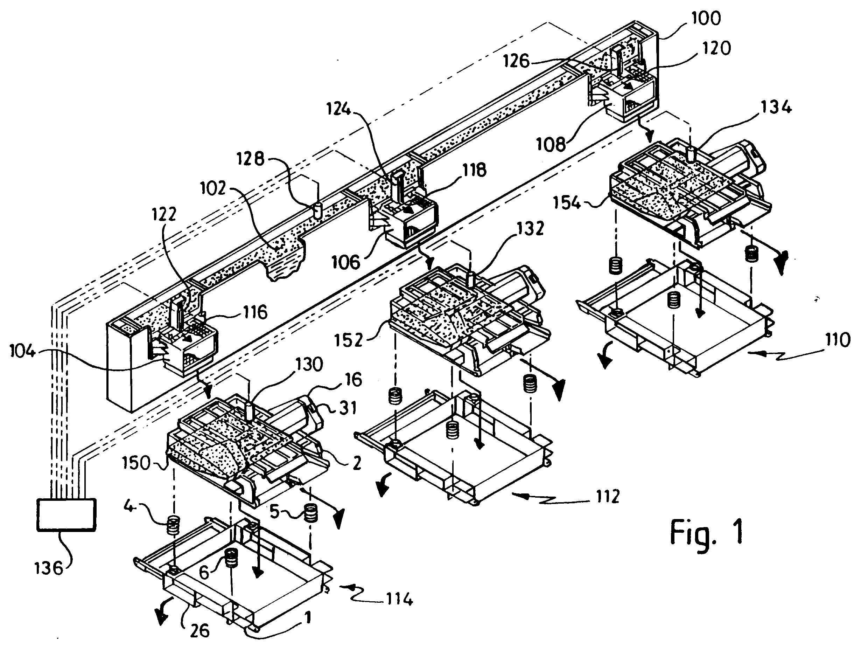

With reference to Figure 1, the apparatus comprises an elongate header tank 100 which acts as a reservoir for a mixture of drilling mud and drilling cuttings 102, from which the mud is to be separated for re-use. The tank has three openings against which are mounted three feed chutes 104, 106 and 108, each of which is positioned above a respective one of three vibratory screening units, generally referenced 110, 112 and 114.

The outlets for the tank 100 can be selectively fully or partially blocked by means of gates 116, 118 and 120. Each gate is slidably mounted in its respective outlet, and can be raised and lowered by a respective one of three pneumatic operating cylinders 122, 124 and 126. When fully lowered, each gate completely blocks its respective outlet thereby preventing discharge of mixture through the associated chute. Each pneumatic cylinder is operable to move its respective gate between this fully closed position and fully open position in which the respective outlet is completely unblocked and the rate of flow of mixture through that outlet is therefore determined by the level of mixture in the tank.

The level of mixture in the tank 100 is monitored by a fluid level sensor 128 which, in this example, is an Endress and Hauser FLT 365 (registered trade mark) or FLT 366 sensor (registered trade mark), and which is attached to the tank 100.

In a modified version of the apparatus, the tank 100 has a further similar liquid level sensor which is situated on the opposite side of the chute 106 from the sensor 128.

Each of the screening units 110, 112 and 114 carries a respective one of three liquid level sensors 130, 132 and 134, such as a KDG Mobrey MSP 100 depth sensor (registered trade mark) arranged to detect the "pond" depth (i.e. the level of mixture) on a screen of the unit.

The apparatus also includes three pairs of inlet gate sensors (not shown) each comprising two Stahl 8064-21-120-10000 sensors (registered trade mark) for each of the gates 116, 118 and 120. Each such pair of sensors determines whether the respective inlet gate is fully open or fully closed. The sensor for detecting whether the gate is fully opened provides an indication that the maximum rate of discharge of mixture through the associated outlet has been reached, whilst the other sensor provides confirmation of the gate position for safety purposes.

All the sensors mentioned above are connected to a control unit 136, which provides control signals for the units 110, 112 and 114, and for the cylinders 122, 124 and 126 as discussed below.

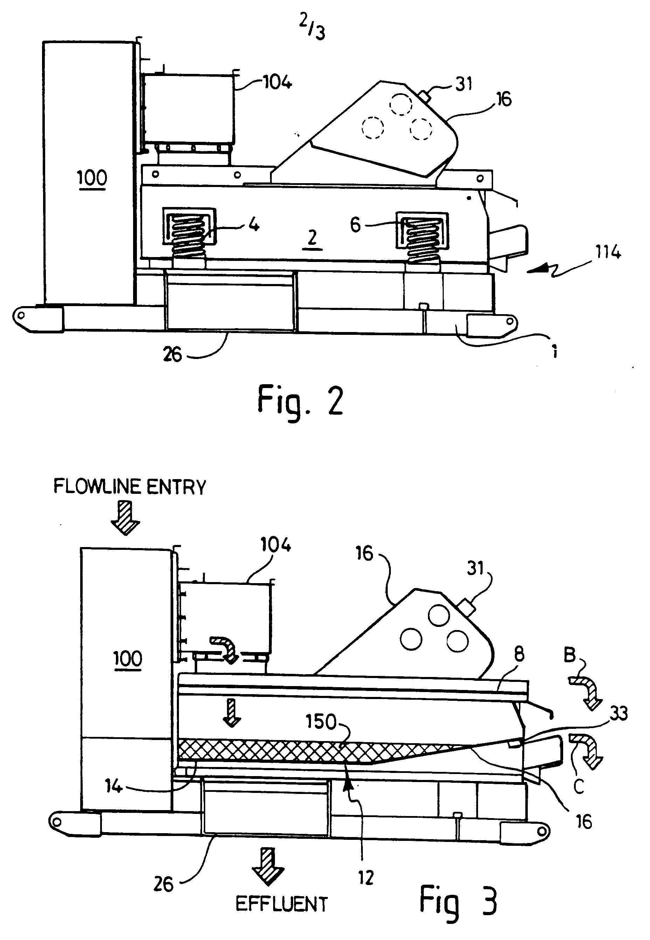

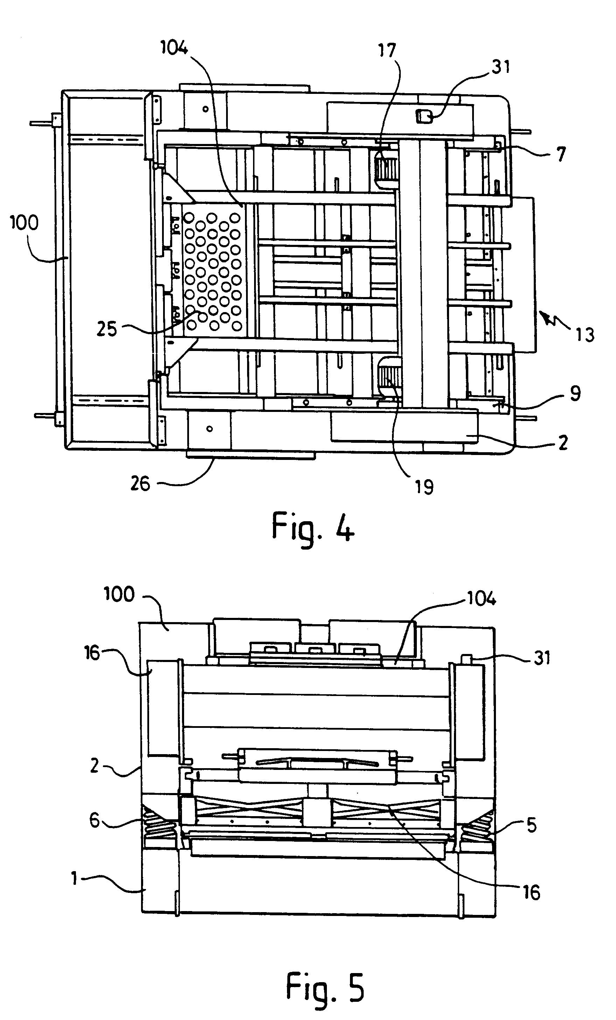

The units 110, 112 and 114 are identical, and so only the unit 114 will be described in detail, with reference to Figures 2 to 5.

As can be seen from Figures 2,3 and 4, the unit 114 is mounted against the tank 100, immediately underneath the feed chute 104. The unit 114 comprises a base 1 on which a basket 2 is mounted through four compression springs, two of which are shown at 4 and 6. The other two springs are situated at similar positions on the opposite side of the basket 2. One of the said other two springs is the spring 5 visible in Figure 1. The basket 2 acts as a support for an upper wire mesh screen 8 (Figure 3) which acts as a preliminary scavenging screen. The screen 8 is positioned immediately above a second screen 12 which has a substantially horizontal portion 14 and an inclined portion 16 at its right hand end as viewed in Figures 2 to 5.

Each of the portions 14 and 16 is formed from a respective pair of rectangular screen panels each of which extends halfway across the basket 2.

The panels are supported on side rails (7, 9) on the basket 2 and on a central longitudinal beam 13 attached to the basket 2. The panels are releasably held in position by means of a pneumatic clamping system (not shown) associated with the rails and beam.

Each of the panels of the screen 12 has two layers of mesh, an upper layer of mesh which is finer than the mesh of the screen 8 and a lower layer which is coarser than the upper layer and which supports the latter.

The basket 2 also carries a head unit 16 on which two electric motors 17, 19 are mounted. Each motor drives a respective shaft attached to an eccentric weight. In use, the motors impart the required vibrations to the basket 2, and hence to the screens 8 and 12.

The above features of the unit 114 are similar to the corresponding features of the Rig Technology current VSM 100 shale shaker.

The chute 104 is situated directly above the screen 12, and includes a perforated floor 25 which filters out any very large material and ensures that the mixture from the box 20 is evenly spread over the upper screen 8.

The screen 8 separates cuttings which are too large to pass through the mesh of that screen from the drilling mud and smaller cuttings, which pass through the screen 8 onto the screen 12 which performs a similar function, separating smaller cuttings from the mud. The mud leaving the apparatus from the screen 12 is discharged though outlet 26 and is suitable for re-use.

The vibrations imparted to the basket 2 by the motors on the head 16 cause the cuttings on the screens to travel towards the edges of the screens remote from the chute 24 and subsequently to be discharged from those ends of the screens (as indicated by arrows B and C) into a respective outlet (not shown).

A motion sensor 31 is mounted on the head 16 and provides an output signal representative of the frequency of vibration of the basket 2. The status of the pneumatic clamping system, which holds screen 12 in position, is monitored by an air pressure sensor 33, such as the KDG Mobrey Series 4301 sensor (registered trade mark).

Sensors 31 and 33 are also connected to the control unit 136, which is based on a central processor unit such as a Mitsubishi A1SJ CPU (registered trade mark). The control unit 136 has outputs respectively connected to the actuating mechanism for the inlet gate and to an inverter. The inverter provides the electric current for driving the motors in the head 16. That current can be varied in response to signals from the unit 136, which thereby controls the frequency of vibration of the basket 2.

The control unit 136 is operable to cause the basket 2 to vibrate at a constant frequency or to vary the speed of operation of the motors 17 and 19 so that the frequency of vibration of the basket 2 is alternately increased and decreased in steps of 5 Hz. The basket 2 is normally vibrated at a frequency in the range 24-33 Hz. If, for example, the basket 2 is initially oscillating at 33 Hz the control unit 136 will subsequently rapidly reduce the frequency of vibration to 28 Hz. The basket 2 then continues to vibrate at 28 Hz for a time period which is randomly selected, and which lies in the range 2 seconds to 3 minutes. After that time, the frequency of vibration is rapidly increased by 5 Hz to 33Hz, which frequency is maintained for 5 minutes, after which the frequency is once again dropped and the cycle repeated.

The frequency is increased and decreased as rapidly as possible, within the constraints imposed by the inertia of the motors, in their associated eccentric weights and of the basket 2.

The frequency steps occur when the control unit 136 detects a reduction in the rate at which the apparatus is processing the mud-cuttings mixture. A manifestation of such a reduction is an increase in the pond depth measured by the sensor 130, which occurs when there is no corresponding increase in the rate calculated from the outputs of sensor 128 and the position of the inlet gate 116.

If, despite the frequency steps mentioned above, the pond depth continues to increase, the unit 136 takes action to avoid the risk of spillage of mud from the apparatus. Such action could include increasing the mean frequency of vibration of the basket 2 until an optimum level, corresponding to maximum throughput is reached..

The tank 100 accepts the mixture of cuttings and mud to be processed before the mixture is fed to the screens, and acts as a buffer against small fluctuations in rate of supply of that mixture (which fluctuations may result from, for example, pitch and heave of floating installations).

Where the tank 120 has two fluid level sensors the outputs of these sensors are analysed by the control unit in such a way as to identify those variations in the sensor output which are caused by rolling of the platform, about an axis perpendicular to the elongate axis of the reservoir, and not by a change in the total volume of mixture in the reservoir.

A simple example of such an analysis is the addition of the two sensor outputs. This form of analysis can be effective because a decrease in the depth detected by one sensor would be accompanied by a corresponding increase in depth detected by the other sensor. Alternatively, the sensor outputs can be subjected to other analytical techniques such as auto-correlation or spectral density function analysis.

The rolling movement of the apparatus will also affect the distribution of mixture across each of the screens, and hence the detected pond depths.

Generally, the allowable limits of displacement of the platform (on which the apparatus is installed) for operations to continue, is around 3 degrees from the horizontal. If the apparatus is installed towards the periphery of the platform, some lateral distance from the plane of the centre of gravity, this tilt may translate into a quite large vertical displacement in space. As far as any fluid materials are concerned, the actual displacement will be restricted to that allowed by the dimensions of the container. In the case of a 3 degree change, applied to a container of dimensions 1 metre by 1 metre, this translates to periodic changes in depth of liquid at a given point in the container of about 50mm.

The movement of the platform also has an effect on the outputs of the sensors 130, 132 and 134. However, since these variations are cyclic, this effect can, if necessary, be compensated for by similar analytical techniques to those used for the outputs of the level sensors on the tank 110. Alternatively, the sensor 132 may be one of two such sensors mounted one on either side of the basket of the unit 112. A comparison of the outputs of these sensors is then used, with the aid of a "look-up table" to deduce the effect of the platform movement on the detected pond depths for all the units 110, 112 and 114.

A Thule Rigtech PD 50 (registered trade mark) unit can be used to analyse samples from the cuttings/mud mixture fed to the tank 100, and from outlet 26 to enable the efficiency with which the apparatus removes cuttings to be monitored.

In use, the mixture of cuttings and mud to be processed flows into the tank 100. Initially, none of the screening units is active, and the gates 116, 118 and 120 are all in their closed positions as a result of which the level of mixture in the tank rises. That level is monitored by the control unit 136 using the sensor 128.

When the level of mixture in the tank 100 has reached a predetermined level, as shown in Figure 1, the control unit 136 activates the motors for vibrating the basket 2 of the unit 114, and actuates the cylinder 122 so as to raise the gate 116 and allow mixture to be discharged from the tank 100 on to the screens of the unit 114 through the chute 104.

The deposition of mixture on the unit 114 causes a pond 150 of cuttings and fluid to accumulate on the screen 12. For the sake of clarity the pond 150 is shown in Figure 1 superimposed on the basket 2. The depth of the pond is monitored by the control unit 136 using the sensor 130.

The unit 136 continues to monitor the level of mixture in the tank 100 and the depth of the pond 150, and attempts to maintain the level of the mixture in the tank 100 by controlling the position of the gate 116. If the predetermined level in the tank 100 is exceeded, the control unit 136 activates an alarm to indicate possible overflow of the tank 100.

If, on the other hand, the level of mixture in the tank 100 is substantially below the predetermined level, the control gate 116 is closed and the screening unit 114 deactivated. thus the control unit 136 attempts to maintain a constant level of fluid behind the feedgates 116, 118 and 120 and thus to maintain the relationship between the position of a given feedgate and the rate of discharge of mixture through the associated chute.

If the depth of the pond 150 on the unit 114 rises above the predetermined maximum level as shown in Figure 1, the control unit 136 activates the unit 112 and opens the gate 118 using the cylinder 124. The control unit 136 then monitors the output of these sensor 132, and hence the depth of the pond 152 which is formed on the basket of the unit 112. The control unit 136 also controls the positions of the gates 116 and 118 so as to maintain the level of mixture in the tank 100. Thus, any fluctuations in the rate of flow of mixture into the tank 100 are accommodated by adjustments of the positions of the gates 116 and 118.

Where the pond depth in each of the units 112 and 114 is at the predetermined maximum, the control unit 136 then opens the gate 120 and activates the unit 110, and then monitors the depth of the pond 154 formed on the unit 110. Where the ponds 150, 152 and 154 are all at their maximum depth, the control unit 136 activates an alarm to indicate that the system is overloaded. In that event, additional mud is allowed to flow over the end of one or more of the units 110, 112 and 114.

If the flow of mixture into the tank 100 reduces to the extent that two screening units can process the mixture at the necessary rate, the unit 110 is shut down, and the gate 120 closed. If the flow of mixture into the tank 100 is further reduced, to the extent that only one unit is needed, the unit 112 is shut down and the gate 118 is closed.

Thus, if the apparatus is not overloaded, the control unit 136 at any time is operating only a sufficient number of screening units necessary to process mixture at the desired rate.

If only the units 114 and 112 are operating, and the flow into the tank 100 is such that one of those shakers is fully loaded, i.e. the pond on that shaker is that the maximum depth, but the other is not, the control unit 136 adjusts the relative positions of the gates 116 and 118 so as to equalise the flow of mixture onto the shakers 114 and 112. To do this, the gates 116 and 118 are controlled to maintain the level of mixture in the tank 100 whilst the control unit calculates the average pond depth in the units 114 and 112, and progressively adjusts the relative positions of the feedgates 118 and 116 to move the pond depth in each of the shakers 112 and 114 towards the calculated average. This process is continuously repeated so that the pond depths in the units 114 and 112 are substantially equal.

Where all three screening units 110, 112 and 114 are operating, but the required rate of processing of fluid is less than the maximum rate for the apparatus, the flow of mixture to all three screening units can be equalised in a similar fashion to the approach used to equalise the flow between two units.

Thus, the load of fluid on any operating shaker is always adjusted to the optimum, fluid losses from the apparatus are eliminated or a loss alarm is activated, giving an operator the opportunity to intervene. Furthermore, the time an operator is required to be in attendance at the equipment, and exposed to fumes from the drilling fluid, is reduced. Furthermore, the control over the loading of the screening units 110, 112 and 114 can extend the life of the screens of those units.

It will be appreciated that although apparatus having three screening units is described, the invention is applicable to apparatus which has two units or four or more units

## Claims

1. Vibratory screen filter apparatus for removing solids from a mixture of liquid and solids, comprising a plurality of vibratory screening units (110, 112, 114), each having a filter screen (8, 12) and vibrating means (16, 17, 19) for vibrating said screen; common inlet means (100) ajustable to vary the relative rates of supply of mixture to the screens: sensor means (130, 132, 134) for use in monitoring the amount of mixture on each screen; and control means (136) operable, in response to signals from said sensor means and data on the required rate of processing of the mixture to control the relative amounts of mixture supplied to the screening units and to control the operation of said units to enable said required rate of processing to be achieved.

2. Apparatus according to claim 1 in which the apparatus includes further sensor means (128) for monitoring the amount of mixture at the inlet means, thereby to provide said data on the required rate of processing.

3. Apparatus according to claim 2 in which the control unit is operable to activate further units in response to an increase in the rate of supply of mixture to the apparatus if some but not all of the screening units are operating and the sensor means indicates that the amount of mixture on each screen corresponds to a predetermined maximum, for that screen.

4. Apparatus according to claim 2 or 3 in which the control means is operable in response to the detection of an increase in the amount of mixture at the inlet means, to increase the rate of supply of mixture to any operating unit, the amount of mixture on the screen of which is less than said maximum.

5. Apparatus according to any of the preceding claims in which the sensing means comprises a plurality of level sensors (130, 132, 134), each associated with a respective unit, and each arranged to detect the level of mixture on the screen of its unit.

6. Apparatus according to any of claims 2 to 5 in which the inlet means comprises a reservoir having a plurality of outlets (104, 106, 108), each associated with a respective screening unit: and a plurality of gates (116, 118, 120), each operable to control the rate at which mixture passes through a respective one of the outlets.

7. Apparatus according to claim 6 in which the further sensor means (128) comprises one or more level sensors for monitoring the level of mixture in the reservoir.

8. Apparatus according to claim 7 in which the further sensor means comprises two sensors situated at spaced apart regions on the reservoir and the control means is operable to compare signals from the sensors so as to compensate for changes in sensor output caused by tilting of the apparatus.

9. Apparatus according to any of claims 6 to 8 in which the reservoir comprises a tank.

10. Apparatus according to claim 5 in which the control means (136) is operable to compare the outputs from said level sensors of the sensor means, to compensate for changes in the outputs of those sensors caused by tilting of the apparatus.

11. Apparatus according to either of claims 2 and 3 in which the apparatus includes a alarm, and the control means is operable to activate the alarm when all the screening units are operating, the amount of mixture is on the screen of each unit is at or near said maximum, and the required rate of processing of the mixture increases.

12. Apparatus according to any of the preceding claims in which the control means is operable to alter the frequency of vibration of the screen.

13. Apparatus according to claim 12 in which the control means is operable to alter frequency in a series of alternating increasing and decreasing steps.

14. A method of removing solids from a mixture of solids and liquids at a required rate which can vary, the method comprising the steps of depositing the mixture on one or more of a plurality of vibratory screening units, each having a respective filter screen, vibrating the or each said screen, monitoring the amount of mixture on the screen of each operating filter unit; controlling the operation of the units and adjusting the rate of supply of mixture to at least one of said operating units so as to accommodate changes in the required rate of processing of the mixture.

15. A method according to claim 14 in which said control of the screening units includes activating and de-activating selected units so as to accommodate increases and decreases in said required rates respectively.

## Patentansprüche

1. Vibrationssieb-Filtereinrichtung zum Entfernen von Feststoffen aus einem Gemisch von Flüssigkeit und Feststoffen, mit einer Mehrzahl von Vibrationssieb-Einheiten (110, 112, 114), deren jede ein Filtersieb (8, 12) und eine Vibrationsvorrichtung (16, 17, 19) aufweist, um das Sieb in Vibrationen zu versetzen, einer gemeinsamen Einlaßvorrichtung (100), die so einstellbar ist, daß die relativen Zuführraten des Gemisches zu den Sieben einstellbar ist, einer Sensorvorrichtung (130, 132, 134) für die Überwachung der Menge an Gemisch an jedem Sieb, und einer Steuervorrichtung (136), die in Abhängigkeit von Signalen aus der Sensorvorrichtung und Daten der gewünschten Verarbeitungsrate des Gemisches betätigbar ist, uni die relativen Gemischanteile, die den Siebeinheiten zugeführt werden, und den Betrieb dieser Einheiten zu steuern, damit die gewünschte Verarbeitungsrate erreicht wird.

2. Einrichtung nach Anspruch 1, bei der eine weitere Sensorvorrichtung (128) zur Überwachung des Gemischanteiles an der Einlaßvorrichtung vorgesehen ist, um diese Daten auf der gewünschten Verarbeitungsrate zu halten.

3. Einrichtung nach Anspruch 2, bei der die Steuereinheit so betätibar ist, daß sie weitere Einheiten in Abhängigkeit von einer Erhöhung der Zuführrate des Gemisches in die Einrichtung aktiviert wird, wenn einige, jedoch nicht alle der Siebeinheiten arbeiten, und die Sensorvorrichtung anzeigt, daß die Menge an Gemisch auf jedem Sieb einem vorbestimmten maximalen Wert für dieses Sieb entspricht.

4. Einrichtung nach Anspruch 2 oder 3, bei der die Steuervorrichtung in Abhängigkeit von der Anzeige einer Erhöhung der Gemischmenge an der Einlaßvorrichtung betätigbar ist, uni die Zuführrate des Gemisches zu einer Betriebseinheit zu erhöhen, wenn die Menge an Gemisch auf dem Sieb geringer ist als das Maximum.

5. Einrichtung nach einem der vorausgehenden Ansprüche, bei der die Sensorvorrichtung eine Mehrzahl von Pegel-Meßfühlern (130, 132, 134) aufweist, deren jeder einer entsprechenden Einheit zugeordnet ist, und deren jeder so angeordnet ist, daß et den Pegel des Gemisches auf dem Sieb seiner Einheit detektiert.

6. Einrichtung nach einem der Ansprüche 2 - 5, bei der die Einlaßvorrichtung einen Sammelbehälter mit einer Mehrzahl von Auslässen (104, 106, 108), deren jeder einer entsprechenden Siebeinheit zugeordnet ist, und eine Mehrzahl von Gattern (116, 118, 120), deren jedes so betätigbar ist, daß die Rate gesteuert wird, mit der das Gemisch durch einen entsprechenden Auslaß geführt wird, aufweist.

7. Einrichtung nach Anspruch 6, bei der die weitere Sensorvorrichtung (128) einen oder mehrere Pegel-Meßfühler zum Überwachen des Pegels des Gemisches im Vorratsbehälter aufweist.

8. Einrichtung nach Anspruch 7, bei dem die weitere Sensorvorrichtung zwei Sensoren aufweist, die an beabstandeten Bereichen am Vorratsbehälter angeordnet sind, und die Steuervorrichtung so betätigbar ist, daß sie Signale aus den Sensoren vergleicht, um Änderungen im Sensorausgang zu kompensieren, die durch Kippen der Einrichtung verursacht sind.

9. Einrichtung nach einem der Ansprüche 6 - 8, bei dem der Sammelbehälter ein Tank ist.

10. Einrichtung nach Anspruch 5, bei dem die Steuervorrichtung (136) so betätigbar ist, daß sie die Ausgänge aus den Pegelsensoren der Sensorvorrichtung vergleicht, um Änderungen in den Ausgängen dieser Sensoren, die durch Kippen der Einrichtung verursacht sind, zu kompensieren.

11. Einrichtung nach einem der Ansprüche 2 und 3, bei der eine Alarmvorrichtung vorgesehen ist, und die Steuervorrichtung so betätigbar ist, daß sie die Alarmvorrichtung auslöst, wenn alle Siebeinheiten im Betrieb sind, wobei die Menge an Gemisch auf dem Schirm einer jeden Einheit ein Maximum oder ein angenähertes Maximum ist, und die gewünschte Rate der Verarbeitung des Gemisches zunimmt.

12. Einrichtung nach einem der vorausgehenden Ansprüche, bei der die Steuervorrichtung so betätigbar ist, daß sie die Vibrationsfrequenz des Siebes verändert.

13. Einrichtung nach Anspruch 12, bei der die Steuervorrichtung so betätigbar ist, daß sie die Frequenz in einer Reihe von abwechselnden, größer und kleiner werdenden Schritten verändert.

14. Verfahren zum Entfernen von Feststoffen aus einem Gemisch aus Feststoffen und Flüssigkeiten mit einer gewünschten Geschwindigkeit, die variieren kann, das Gemisch auf einer oder mehreren einer Mehrzahl von Vibrations-Siebeinheiten abgelegt wird, deren jede ein entsprechendes Filtersieb hat, das oder jedes Sieb in Vibrationen versetzt wird, die Menge an Gemisch auf dem Sieb einer jeden im Betrieb befindlichen Filtereinheit überwacht wird, die Arbeitsweise der Einheiten gesteuert und die Zuführrate des Gemisches zu mindestens einer der im Betrieb befindlichen Einheiten eingestellt wird, derart, daß Änderungen in der gewünschten Verarbeitungsrate des Gemisches aufgenommen werden.

15. Verfahren nach Anspruch 14, bei dem die Steuerung der Siebeinheiten aktivierende und deaktivierende, ausgewählte Einheiten aufweist, so daß Vergrößerungen und Verkleinerungen in den gewünschten Raten entsprechend angepaßt werden.

## Revendications

1. Dispositif de filtrage à crible vibrant pour éliminer les solides d'un mélange de liquide et de solides, comprenant plusieurs unités de criblage vibrant (110, 112, 114), chacune possédant un filtre-crible (8, 12) et de dispositifs vibrants (16, 17, 19) pour faire vibrer le crible; un dispositif d'admission commune (100) réglable pour varier les débits relatifs d'alimentation du mélange aux cribles; des dispositifs de détection (130, 132, 134) utilisés pour le contrôle de la quantité de mélange sur chaque crible; et un dispositif de commande (136) prêt à fonctionner, en réponse aux signaux provenant desdits dispositifs de détection et aux données sur le débit de traitement exigé du mélange, pour commander les quantités relatives de mélange alimenté aux unités de criblage et pour commander le fonctionnement desdites unités afin de pouvoir atteindre le débit de traitement exigé.

2. Appareil selon la revendication 1 dans lequel l'appareil inclut un dispositif de détection (128) supplémentaire pour contrôler la quantité du mélange au niveau du dispositif d'admission, et par conséquent fournir lesdites données sur le débit de traitement exigé.

3. Appareil selon la revendication 2 dans lequel l'unité de commande est prête à fonctionner pour activer d'autres unités en réponse à une augmentation du débit d'alimentation en mélange de l'appareil si certaines unités de criblage mais pas toutes fonctionnent et si le dispositif de détection indique que la quantité de mélange sur chaque crible correspond à un maximum prédéterminé, pour ce crible.

4. Appareil selon la revendication 2 ou 3 dans lequel le dispositif de commande est prêt à fonctionner en réponse à la détection d'une augmentation de la quantité de mélange au niveau du dispositif d'admission, pour augmenter le débit d'alimentation de mélange à n'importe quelle unité fonctionnant, la quantité de mélange sur le crible qui est inférieure audit maximum.

5. Appareil selon l'une des revendications précédentes dans lequel le dispositif de détection comprend plusieurs détecteurs de niveau (130, 132, 134), chacun correspondant à une unité respective, et chacun disposé pour détecter le niveau de mélange sur le crible de cette unité.

6. Appareil selon l'une des revendications 2 à 5 dans lequel le dispositif d'admission comprend un réservoir possédant plusieurs orifices de sortie (104, 106, 108), chacun associé à une unité de criblage respective; et plusieurs obturateurs (116, 118, 120, chacun prêt à fonctionner pour contrôler le débit auquel le mélange passe à travers l'un des orifices de sortie respectifs.

7. Appareil selon la revendication 6 dans lequel un dispositif de détection supplémentaire (128) comprend un ou plusieurs détecteurs de niveau pour contrôler le niveau de mélange dans le réservoir.

8. Appareil selon la revendication 7 dans lequel le dispositif de détection supplémentaire comprend deux détecteurs espacés sur le réservoir et le dispositif de commande est prêt à fonctionner pour comparer les signaux des détecteurs afin de compenser les changements de rendement du détecteur causés par l'inclinaison de l'appareil.

9. Appareil selon l'une des revendications 6 à 8 dans lequel le réservoir comprend une cuve.

10. Appareil selon la revendication 5 dans lequel le dispositif de commande (136) est prêt à fonctionner pour comparer les sorties desdits détecteurs de niveau du dispositif de détection, pour compenser les changements de rendement de ces détecteurs causés par l'inclinaison de l'appareil.

11. Appareil selon la revendication 2 ou 3 dans lequel l'appareil inclut une alarme, et le dispositif de commande est prêt à fonctionner pour activer l'alarme lorsque toutes les unités de criblage fonctionnent, la quantité de mélange sur le crible de chaque unité est égale au ou proche dudit maximum, et le débit de traitement exigé du mélange augmente.

12. Appareil selon l'une des précédentes revendications dans lequel le dispositif de commande est prêt à fonctionner pour modifier la fréquence de vibration du crible.

13. Appareil selon la revendication 12 dans lequel le dispositif de commande est prêt à fonctionner pour modifier la fréquence dans une série d'étapes alternatives d'augmentation et de diminution.

14. Une méthode d'élimination des solides dans un mélange de solides et de liquides à un débit exigé qui peut varier, la méthode comprenant les étapes de déposition du mélange sur un ou plusieurs unités de criblage vibrant, chacune possédant un filtre-crible respectif, faisant vibrer le ou chacun desdits cribles, contrôlant la quantité de mélange sur le crible de chaque unité de filtrage fonctionnant; commandant le fonctionnement des unités et ajustant le débit d'alimentation en mélange d'au moins une desdites unités fonctionnant afin de compenser les changements du débit de traitement exigé du mélange.

15. Une méthode selon la revendication 14 dans laquelle ladite commande des unités de criblage inclut l'activation et l'inactivation des unités sélectionnées afin de compenser les augmentations et diminutions desdits débits exigés, respectivement.
